# FASCICULE DE BREVET EUROPEEN

(11) **EP 1 234 987 B1**
(45) Date de publication et mention de la délivrance du brevet: **28.03.2007**
(21) Numéro de dépôt: 02290259.7
(22) Date de dépôt: 04.02.2002
(51) Int. Cl.: F16C 1/26

(54) **Câble de commande comportant un conduit guide-câble en PTFE poreux**
Steuerkabel mit einer Führungshülle aus porösem PTFE
Control cable having a guiding-sheathing of porous PTFE

(30) Priorité: 23.02.2001 FR 0102487
(43) Date de publication de la demande: 28.08.2002
(73) Titulaire: COMPAGNIE PLASTIC OMNIUM, 69007 Lyon (FR)
(72) Inventeur: Chaon, Régis, 52200 Noidant Le Rocheux (FR); Dugand, Pascal, 52200 Perrancey Les-Vieux-Moulins (FR)
(74) Mandataire: de la Bigne, Guillaume Michel Marie

(56) Documents cités:
- US-A- 4 099 425
- US-A- 5 045 600
- US-A- 5 241 880
- US-A- 5 243 876
- US-A- 5 636 551

## Description

La présente invention est relative à un câble de commande gainé du type comprenant un câble intérieur, généralement métallique, un conduit guide-câble en un matériau à faible coefficient de frottement entourant à jeu ledit câble, le cas échéant un lubrifiant, tel qu'une huile ou une graisse, entre le câble et le conduit guide-câble, une armature entourant le conduit guide-câble, et une gaine extérieure de protection mécanique, généralement en matière thermoplastique.

De tels câbles de commande gainés, appelés « push-pull » sont notamment utilisés dans des véhicules automobiles. A titre d'applications particulières non limitatives, on peut citer les câbles de commande manuelle de boîte de vitesses, les câbles de commande d'embrayage manuel, les câbles de commande d'accélérateur, les câbles de commande de frein à main, les câbles de commande d'ouverture de trappe à essence, les câbles de commande d'ouverture de portières et de vitres, les câbles de commande de sièges, les câbles de commande d'ouverture de capot-moteur, de hayon et de coffre, et les câbles de commande de climatisation.

En dehors des applications aux véhicules automobiles, on peut citer des utilisations pour des freins de bicyclettes, des dérailleurs de bicyclettes ou encore des commandes aéronautiques.

Selon les applications, le câble intérieur peut être un câble toronné nu ou plastifié, un câble simple nu ou plastifié ou encore comporter des torons sur lesquels est enroulé un fil plat.

L'armature peut être constituée d'une couche d'armature assurant la résistance à la compression, sous la forme par exemple d'une carcasse constituée d'un fil plat enroulé, et/ou d'une couche assurant la résistance à la traction, constituée par exemple de torons enroulés en hélice.

Pour la réalisation du conduit guide-câble, on a déjà proposé d'utiliser des résines fluorées, en particulier du polytétrafluoroéthylène (PTFE), comme décrit dans le brevet US 4 099 425. Dans ce document, une couche de PTFE poreux est obtenue par rubanage, c'est-à-dire un enroulement d'un ruban de PTFE sur un mandrin puis une couche de polymère non poreux est mise en place par une opération de recouvrement.

La présente invention se propose de réaliser un câble gainé dont le conduit guide-câble présente des propriétés améliorées, notamment de tenue en endurance et une meilleure qualité de lubrification du câble contenu à l'intérieur, ainsi qu'un rendement élevé.

On rappelle que le rendement dans ce contexte est déterminé, pour un nombre de cycles donné comme étant le rapport en pourcentage de la valeur d'une charge axiale appliquée au câble logé dans le conduit à l'effort nécessaire pour déplacer axialement ce câble.

Le câble de commande gainé selon l'invention se caractérise essentiellement par le fait que le conduit guide-câble est un conduit en PTFE microporeux obtenu par extrusion lubrifiée et ayant subi en sortie de filière d'extrusion simultanément un étirage et un chauffage à une température supérieure à la température de frittage du PTFE.

Le conduit guide-câble du câble de commande gainé selon la présente invention peut notamment être obtenu par mise en oeuvre du procédé décrit dans le brevet EP-0 684 121 de la société déposante, et présente une densité inférieure à 2.

Le conduit guide-câble selon l'invention présente une couche de PTFE avec un gradient de densité dans l'épaisseur, la densité augmentant de l'intérieur vers l'extérieur. Ainsi, la porosité est très faible, voire quasiment nulle au niveau de la surface extérieure de sorte que la présence d'une couche extérieure en polymère non poreux peut être évitée.

Traditionnellement une huile ou une graisse de lubrification est introduite dans le conduit guide-câble ou appliquée sur le câble intérieur avant sa mise en place dans le conduit.

Selon l'invention, on peut avantageusement introduire une telle huile ou graisse de lubrification dans le conduit guide-câble lors du processus d'extrusion, ce qui permet d'obtenir un conduit guide-câble prélubrifié permettant le cas échéant de se dispenser d'une lubrification ultérieure lors de la mise en place du câble intérieur dans le conduit guide-câble.

Il convient, bien entendu, de choisir une huile ou une graisse qui peut être dissoute dans le lubrifiant utilisé dans le processus d'extrusion lubrifiée et qui soit suffisamment stable pour résister à la température à laquelle est soumis le conduit guide-câble lors de l'étape de chauffage en sortie de filière d'extrusion.

De manière à conférer au conduit guide-câble une structure fortement fibrée dans le sens longitudinal, on effectue un étirage en sortie de filière d'extrusion avec un taux de tirage (rapport vitesse de sortie sur vitesse d'entrée) compris entre 1,5 et 3 et pendant une durée de 5 à 10 secondes à une température de 350°C.

L'invention sera mieux comprise à la lecture de la description qui va suivre, donnée uniquement à titre d'exemple, et fait en se référant aux dessins annexés dans lequel:
- la figure 1 est une vue schématique, en coupe, d'un mode de réalisation de câble de commande gainé selon la présente invention, utilisable par exemple comme câble de commande d'accélérateur de véhicule automobile.
- la figure 2 est une vue schématique, en coupe, d'un second mode de réalisation de câble de commande gainé selon la présente invention utilisable par exemple comme câble de commande de siège de véhicule automobile,
- la figure 3 est une vue schématique, en coupe, d'un troisième mode de réalisation de câble de commande gainé selon la présente invention, utilisable par exemple comme câble de commande de boîte de vitesses de véhicule automobile,
- la figure 4 est une vue schématique, en coupe, d'une variante de réalisation du câble de commande gainé illustré à la figure 3,
- les figures 5 et 6 sont des macrophotographies de la paroi intérieure d'un conduit guide-câble de câble gainé selon l'invention.

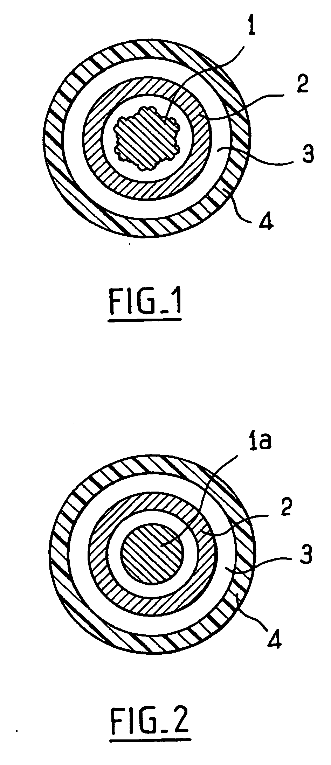

Le câble gainé illustré à la figure 1 comporte un câble en acier intérieur 1, coronné, nu, d'un diamètre de 1 à 2 mm.

Un conduit guide-câble 2 entoure le câble intérieur 1 avec un jeu dans lequel est introduite une graisse ou une huile silicone, qui peuvent être le cas échéant omises si le conduit guide-câble est prélubrifié lors du processus d'extrusion.

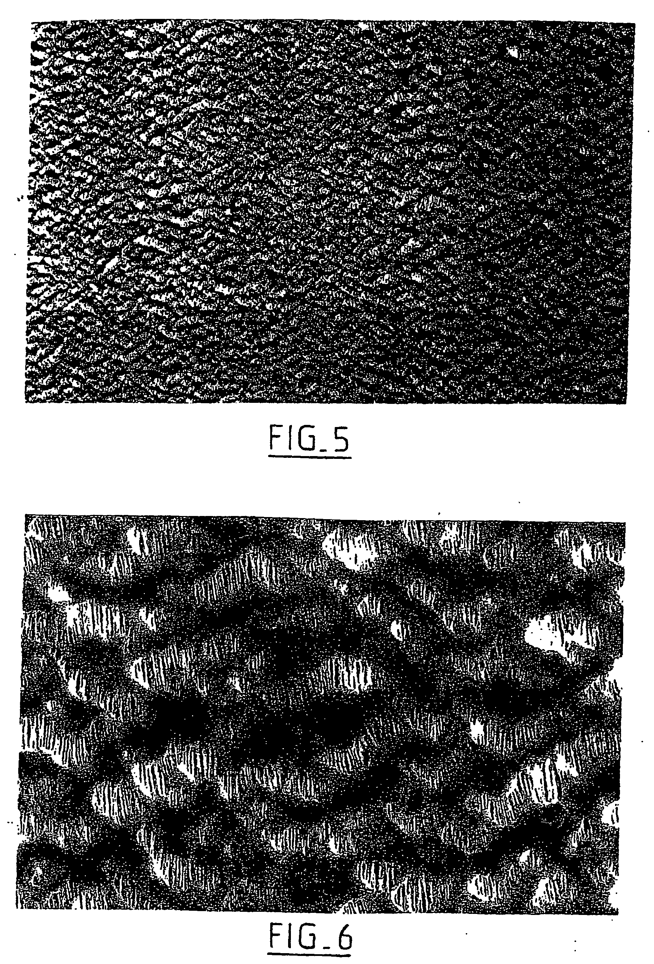

Le conduit 2 présente un diamètre intérieur de 2,8 mm, un diamètre extérieur de 3,5 mm et est réalisé en PTFE microporeux étiré à chaud en sortie de filière d'extrusion lubrifiée, le matériau du conduit présentant une structure fortement fibrée dans le sens longitudinal et des microcavités comme on le voit sur les macrophotographies faisant l'objet des figures 5 et 6. Ces macrophotographies sont des images électroniques aux électrons secondaires d'un microscope électronique à balayage.

Le grossissement pour l'image de la figure 5 est de 150 et pour l'image de la figure 6 de 1000.

Le conduit 2 est entouré par une armature de résistance à la compression 3 en fil plat en acier enroulé, d'une largeur de 4 mm et d'une épaisseur de 0,9 mm, l'armature 3 étant entourée par une couche extérieure 4 en polymère thermoplastique, notamment en polyamide.

On a soumis un conduit guide-câble 2 tel que celui illustré à la figure 1 contenant un câble toronné 1 tel que celui illustré dans la figure 1 d'un diamètre intérieur de 2,8 mm et d'un diamètre extérieur de 3,5 mm, à un essai d'endurance sur un banc de test en appliquant un poids de 5 Kg à une température de 80°C, avec un parcours en S et une fréquence du cycle de 0,5 Hz.

Aucune rupture n'a été constatée après 2 millions de cycles, le rendement étant d'environ 94 % en fin de cycle.

On constate ainsi une grande résistance à l'usure, et en outre, les micro-porosités de la structure du conduit guide-câble assurent une bonne rétention de l'huile ou de la graisse de lubrification, ce qui garantit une excellente lubrification du câble.

On se réfère maintenant à la figure 2 qui illustre un câble gainé selon l'invention utilisable notamment comme câble de commande de siège de véhicule automobile ou encore de commande de climatisation.

La différence par rapport au câble de la figure 1 porte sur le fait que le câble intérieur la est un câble acier monobrin, nu, d'un diamètre de 1 mm.

Selon les applications, le conduit guide-câble 2 peut présenter des diamètres intérieurs de 1,5, 1,8 ou 2,2 mm, avec des diamètres extérieurs respectifs de 2,5, 2,5 et 2,8 mm.

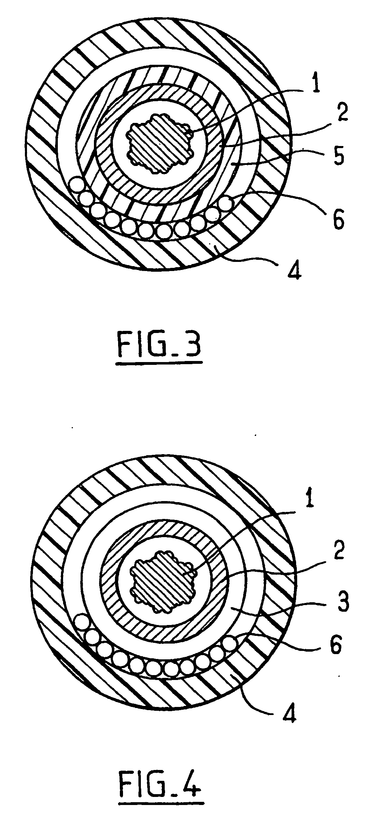

Les câbles gainés selon l'invention illustrés aux figures 3 et 4 présentent tous deux un câble intérieur toronné 1, en acier, nu, identique au câble 1 de la figure 1, un conduit guide-câble 2, réalisé dans le même matériau que les conduits guide-câble des modes de réalisation des figures 1 et 2 et présentant un diamètre intérieur de 3,5 mm et un diamètre extérieur de 4,5 mm, le conduit étant réalisé sous la forme d'une structure bi-couche avec une couche 5 de revêtement en polymère thermoplastique, notamment en polyamide ou polypropylène d'un diamètre extérieur de 6 mm.

L'armure est formée d'une couche de torons enroulés en hélice 6 assurant une résistance à la traction.

Le mode de réalisation de la figure 4 diffère de celui de la figure 3 par l'absence du revêtement intermédiaire 5 et la présence autour du conduit 2 d'une couche d'armature de fil plat enroulé 3 comme dans les modes de réalisation des figures 1 et 2.

Il est bien évident que l'invention n'est pas limitée aux modes de réalisation précédemment décrits, mais que l'on peut lui apporter différentes variantes et modifications sans pour autant sortir du cadre des revendications.

## Revendications

1. Câble de commande gainé comprenant un câble intérieur (1, 1a), un conduit guide-câble (2) en un matériau à faible coefficient de frottement entourant à jeu ledit câble, une armature (3 ; 6) entourant le conduit guide-câble et une gaine extérieure (4) de protection mécanique, **caractérisé par le fait que** le conduit guide-câble (2) est un conduit en PTFE microporeux obtenu par extrusion lubrifiée et ayant subi, en sortie de filière d'extrusion, simultanément un étirage et un chauffage à une température supérieure à la température de frittage du PTFE.

2. Câble de commande gainé selon la revendication 1, **caractérisé par le fait que** le conduit guide-câble (2) contient une huile ou une graisse de lubrification introduite lors du processus d'extrusion lubrifiée.

3. Câble de commande gainé selon la revendication 1 ou 2, **caractérisé par le fait que** le conduit guide-câble (2) présente une densité inférieure à 2.

4. Câble de commande gainé selon l'une quelconque des revendications 1 à 3, **caractérisé par le fait que** le conduit guide-câble (2) présente une structure fortement fibrée dans le sens longitudinal, obtenue en effectuant un étirage en sortie de filière d'extrusion avec un taux de tirage compris entre 1,5 et 3 et pendant une durée de 5 à 10 secondes à une température de 350°C.

5. Utilisation du câble de commande selon l'une quelconque des revendications 1 à 4 comme câble de commande dans un véhicule automobile, notamment comme câble de commande d'accélérateur.

## Claims

1. A sheated control cable comprising an inner cable (1 ; 1a), a cable-guide duct (2) of a material having a low coefficient of friction surrounding said cable with clearance, armoring (3 ; 6) surrounding the cable-guide duct, and an outer sheath providing mechanical protection, **characterized in that** the cable-guide duct (2) is a duct of microporous PTFE obtained by lubricated extrusion and that has been subjected, on leaving the extruder die, to simultaneous drawing and heating to a temperature above the sintering temperature of PTFE.

2. A sheathed control cable according to claim 1, **characterized in that** the cable-guide duct (2) contains lubricating oil or grease introduced during the lubricated extrusion process.

3. A sheathed control cable according to claim 1 or 2, **characterized in that** the cable-guide duct (2) presents specific gravity of less than 2.

4. A sheathed control cable according to any one of claims 1 to 3, **characterized in that** the cable-guide duct (2) presents a structure that is highly fibrous in the longitudinal direction, obtained by drawing at the outlet from the extruder die with a drawing ratio lying in the range 1.5 to 3 and for a duration of 5 s to 10 s at a temperature of 350°C.

5. The use of a control cable according to any one of claims 1 to 4, as a control cable in a motor vehicle, in particular as an accelerator control cable.

## Patentansprüche

1. Ummanteltes Steuerkabel, das ein inneres Kabel (1, 1a), ein Kabelführungsrohr (2) aus einem Werkstoff mit geringem Reibungskoeffizienten, das das Kabel beabstandet umgibt, eine Bewehrung (3; 6), die das Kabelführungsrohr umgibt, und eine äußere Ummantelung (4), die dem mechanischen Schutz dient, umfasst, durch die Tatsache **gekennzeichnet**, dass es sich bei dem Kabelführungsrohr (2) um ein Rohr aus mikroporösem PTFE handelt, das durch geschmierte Extrusion hergestellt wird und beim Austritt aus der Extrusionsziehdüse gleichzeitig einer Reckung und einer Erwärmung auf eine Temperatur unterzogen wird, die höher als die Sintertemperatur des PTFE ist.

2. Ummanteltes Steuerkabel nach Anspruch 1, durch die Tatsache **gekennzeichnet**, dass das Kabelführungsrohr (2) ein Öl oder ein Schmierfett enthält, das während des Vorgangs der geschmierten Extrusion eingeführt wird.

3. Ummanteltes Steuerkabel nach Anspruch 1 oder 2, durch die Tatsache **gekennzeichnet**, dass das Kabelführungsrohr (2) eine Dichte geringer als 2 aufweist.

4. Ummanteltes Steuerkabel nach einem beliebigen der Ansprüche 1 bis 3, durch die Tatsache **gekennzeichnet**, dass das Kabelführungsrohr (2) in Längsrichtung eine stark faserige Struktur aufweist, die beim Austritt aus der Extrusionsziehdüse durch Recken mit einem Ziehfaktor zwischen 1,5 und 3 während einer Dauer von 5 bis 10 Sekunden und bei einer Temperatur von 350 °C erhalten wird.

5. Verwendung des Steuerkabels nach einem beliebigen der Ansprüche 1 bis 4 als Steuerkabel in einem Kraftfahrzeug, insbesondere als Steuerkabel für das Gaspedal.
